# EUROPÄISCHE PATENTSCHRIFT

(11) **EP 1 878 599 B1**
(45) Veröffentlichungstag und Bekanntmachung des Hinweises auf die Patenterteilung: **02.06.2010**
(21) Anmeldenummer: 07012026.6
(22) Anmeldetag: 20.06.2007
(51) Int. Cl.: B60G 21/055, F16F 1/38

(54) **Stabilisator zur Anlenkung einer Stabilisatorstange an einem Kraftfahrzeug**
Stabiliser for linkage of a stabiliser rod on a motor vehicle
Stabilisateur destiné à l'articulation d'une barre de stabilisation sur un véhicule automobile

(30) Priorität: 14.07.2006 DE 102006032826
(43) Veröffentlichungstag der Anmeldung: 16.01.2008
(73) Patentinhaber: Carl Freudenberg KG, 69469 Weinheim (DE)
(72) Erfinder: Schwarz, Helge, 21376 Garlstorf (DE); Höper, Andreas, 21641 Buxtehude (DE)

(56) Entgegenhaltungen:
- EP-A1- 0 227 869
- EP-A1- 0 893 291
- EP-A2- 0 911 195
- EP-A2- 1 391 333
- DE-A1- 10 045 778
- DE-A1-102004 056 884
- FR-A1- 2 806 035
- US-A- 2 626 797
- US-A- 5 290 018

## Beschreibung

### Technisches Gebiet

Die Erfindung befasst sich mit einem Stabilisatorlager, zur Anlenkung einer Stabilisatorstange an einem Kraftfahrzeug aus einer die Stange umschließenden aus einem Elastomer bestehenden und einen axialen Schlitz aufweisenden Lagerbuchse, die von einer Befestigungsschelle umfasst ist.

Stabilisatorlager werden zur Anlenkung von Stabilisatorstangen in Fahrwerken von Kraftwerkzeugen benutzt. Sie dienen als Verbindungselement zwischen Stabilisator und Achse. Je nach Anbringungsort sind verschiedene Montagehöhen für das Stabilisatortager erforderlich. Hierfür sind Ausgleichsteile erforderlich. Ein weiteres Problem entsteht beim Transport des Stabilisatorlagers selbst. Es ist üblich, das Stabilisatorlager mit Schelle beim Stabilisatorlagerhersteller zu montieren. Anschließend wird das vormontierte Bauteil an den Achshersteller geliefert. Wenn hier keine Sicherungsmaßnahmen getroffen wurden, ist es möglich, dass die Schelle beim Transport des Stabilisatorlagers von der Lagerbuchse abspringt.

### Stand der Technik

Durch DE 10 2004 056 884 A1 ist ein Stabilisatorlager bekannt geworden, bei dem die aus Gummi hergestellte Lagerbuchse aus zwei Einzelteilen besteht, wobei einer der Teile mit der Schelle fest verbunden ist und der andere Gummikörperteil als lösbar mit der Schelle verbindbarer loser Gummikörper ausgebildet ist. Beide Teile können durch eine Rastverbindung miteinander verbunden werden. Durch die Rastverbindung wird eine Vormontage der beiden Lagerteile erreicht. Dieses Stabilisatorlager ist in seinem gesamten Aufbau jedoch sehr aufwendig gestaltet und deshalb kostenspielig in seiner Herstellung.

Eine andere Ausbildung eines Stabilisatorlagers ist in der DE 100 45 778 A1 gezeigt. Dort wird die aus Gummi bestehende Lagerbuchse durch einen anvulkanisierten Sockel ergänzt und diese beiden miteinander verbundenen Teile von der Schelle umfasst. Die Lagerbuchse hat einen parallel zu ihrer Längsachse verlaufenden seitlichen Schlitz, der als Montageöffnung dient, um die Stabilisatorstange in die hochgeklappte Lippe der Lagerbuchse einbringen zu können. Bei dieser Ausführungsform ist der Herstellungsprozess ebenfalls aufwendig, weil die Lagerbuchse mit dem aus Kunststoff bestehenden Sockel durch eine speziell ausgewählte Gummimischung durch Vulkanisation miteinander zu verbinden ist. Außerdem ist hier auch nicht gewährleistet, dass beim Transport die Schelle nicht von der Lagerbuchse abspringt.

Durch FR 2806035 A ist ein weitere Stabilisatorlager bekannt, bei dem eine Lagerbuchse, die aus einem Kautschuk besteht, zwischen die Stege einer festen Stütze eingesetzt wird. Auf die Stege wird eine Verschlusskappe aufgesetzt, welche die Lagerbuchse zwischen den Stegen an der Stütze hält. Die Befestigung der Kappe an den Stegen erfolgt über sägezahnartig ausgebildete Flächen an der Kappe und an den Stegen.

### Darstellung der Erfindung

Der Erfindung liegt die Aufgabe zugrunde, ein Stabilisatorlager zu schaffen, welches einfach in seinem Aufbau ist, kostengünstig hergestellt werden kann und leicht zu montieren ist. Darüber hinaus soll der bei der Montage eventuell notwendige Höhenausgleich leicht durchgeführt werden können, und auch eine Transportsicherung vorhanden sein, die sicherstellt, dass ein Lösen der Schelle beim Transport vom vormontierten Lager nicht stattfinden kann.

Die Lösung der gestellten Aufgabe wird mit den Merkmalen des Anspruchs 1 erreicht.

Der Grundgedanke der Erfindung besteht darin, dass die Lagerbuchse durch ein mit der Schelle formschlüssig verbindbares Lageraußenteil in der Schelle unverrückbar gehalten ist. Die Vormontage des Stabilisatorlagers geschieht folglich dadurch, dass die Lagerbuchse in die Schelle eingelegt wird und ein entsprechend ausgebildetes Lageraußenteil in den freigebliebenen Raum zwischen den Schellenseitenwänden das Lageraußenteil eingedrückt wird und in geeigneter Weise in den Seitenwänden der Schelle einrastet.

In vorteilhafter Weise wird die Lagerbuchse in der Form einer Hülse ausgebildet. Der Materialeinsatz wird hier auf ein geringstmögliches Maß verringert. Außerdem wird eine sehr gleichmäßige Anpressung der Lagerinnenwand an die Stabilisatorstange erreicht, indem das Lageraußenteil mit seiner Innenkontur an die Kontur der Lagerbuchse angepasst wird.

In einer sehr günstigen Ausführungsform wird das Lageraußenteil an seinen seitlich vorstehenden Wandteilen mit Hakennasen versehen, die in entsprechenden Öffnungen in den Seitenwänden der Schelle einrasten. Das Lageraußenteil wird aus einem Kunststoff hergestellt, so dass es die nötige Flexibilität für das Einschieben zwischen den Seitenwänden der Schelle und das Einrasten in die entsprechenden Öffnungen hat.

Ein weiterer Vorteil des Außenteils ist die Möglichkeit, die Einpresskraft des Lagers mit Stabilisator in die Schelle sehr definiert auf das Lager zu verteilen.

Zur Verstärkung der Lagesicherung der Lagerbuchse in der Schelle hat die Lagerbuchse in dem von der Schelle umfassten Bereich eine Auswölbung. Die Kontur der Schelle ist an diese Auswölbung angepasst. Dadurch wird verhindert, dass die in die Schelle eingelegte Lagerbuchse axial verschoben werden kann. Der Bereich der Lagerbuchse, in dem die Buchse vom Lageraußenteil erfasst wird, kann rohrförmig bleiben.

In weiterer Ausgestaltung des Erfindungsgedankens ist es möglich, die Lagerbuchse mit einem in das Elastomer eingebetteten geschlitzten Rohr zu versehen. Hierdurch kann das Lager in seiner Steifigkeit beeinflusst werden.

Der axiale Schlitz in der Lagerbuchse wird bevorzugt auf der dem Lageraußenteil abgewandten Seite angebracht. Bei der Herstellung des Lagers wird die Buchse im Bereich des Schlitzes geöffnet, d.h. die den Schlitz bildenden Wandteil liegen im Abstand zueinander. Dies erlaubt eine leichte Einlegung der Stabilisatorstange in das Lager.

### Kurzbeschreibung der Zeichnung

Anhand eines in der Zeichnung dargestellten Ausführungsbeispiel wird die Erfindung nachstehend näher erläutert.

Es zeigt:
- Fig. 1: das Lager in der perspektivischen Ansicht,
- Fig. 2: einen Querschnitt durch die Mittelebene des Lagers,
- Fig. 3: einen Längsschnitt durch das Lager und
- Fig. 4: die Lagerbuchse mit dem Lageraußenteil im Querschnitt
- Fig. 5: das geschlitzte Rohr in perspektivischer Ansicht.

### Ausführung der Erfindung

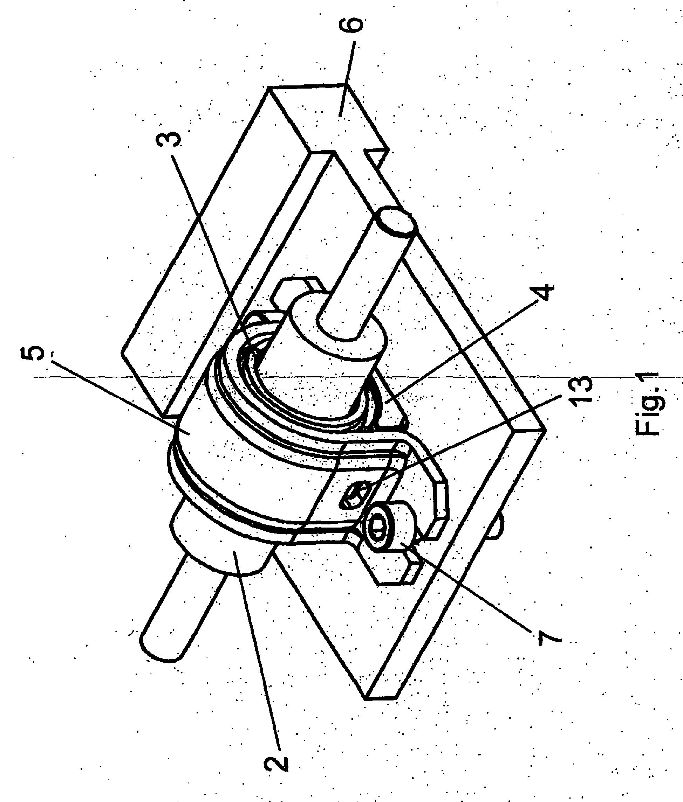

Das in der Figur 1 gezeigte Stabilisatorlager 1 besteht im Wesentlichen aus der die Stabilisatorstange 2 umfassenden Lagerbuchse 3 und dem Lageraußenteil 4, die von der Schelle 5 an dem Karrosserieteil 6 oder Achsteil über die Schrauben 7 befestigt sind.

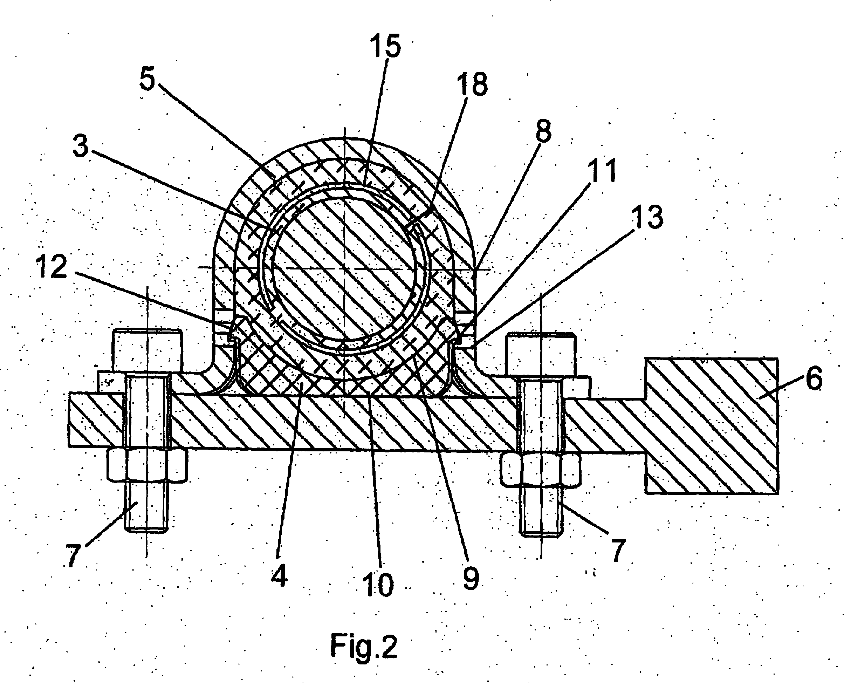

Die Figur 2 zeigt das Lager im Querschnitt. Die Lagerbuchse 3 hat etwa die Form einer Hülse. Die Schelle 5 ist in ihrem oberen Teil halbrund ausgebildet und liegt mit ihrer Innenwandung an der Lagerbuchse 3 an. Die Seitenwände 8 der Schelle 5 verlaufen senkrecht zur Befestigungsebene am Karrosserieteil 6 oder Achsteil. Auch hier liegt die Wandung der Schelle 5 eng an der Außenwandung der Lagerbuchse 3 an, die hier geringfügig in ihrem Durchmesser größer gewählt ist. Das Lageraußenteil 4 ist mit seiner innenliegenden Kontur 9 an die Lagerbuchse 3 angepasst und ist in diesem Abschnitt kreisförmig. Die Außenkontur 10 des Lageraußenteils 4 ist eben ausgebildet und liegt über ihre gesamte Breite am Karrosserieteil 6 an. Die vorstehenden Wandteile 11 des Lageraußenteils 4 sind mit den Hakennasen 12 versehen, die in Öffnungen 13 in den Seitenwänden 8 der Schelle 5 einrasten. Das Lageraußenteil 4 wird aus Kunststoff hergestellt und in seiner Dimension so bemessen, dass es neben der Halterung und Sicherung der Lagerbuchse 3 in der Schelle 5 auch gleichzeitig als Höhenausgleich dient.

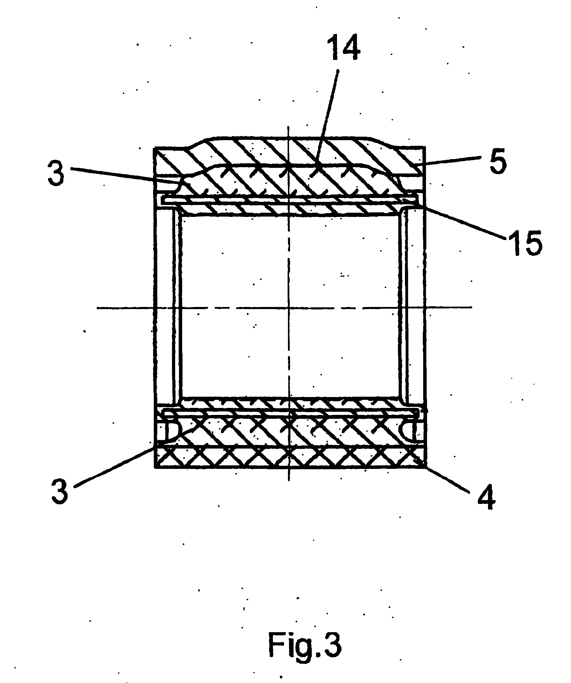

Bei dem in der Figur 3 gezeigten Längsschnitt durch das Lager 1 ist die Auswölbung 14 sichtbar, die an der Lagerbuchse 3 in dem von der Schelle 5 erfassten Bereich der Lagerbuchse angebracht ist. Die Schelle 5 selbst ist hier ebenfalls entsprechend geformt, so dass ein axiales Verschieben von Schelle 5 und Lagerbuchse 3 verhindert wird. In dem von dem Lageraußenteil 4 erfassten Bereich der Lagerbuchse 3 ist eine solche Ausgestaltung von Lagerbuchse 3 und Lageraußenteil 4 nicht erforderlich. Hier können die Teile wie auf der Figur sichtbar, ohne Auswölbung sein. In das Elastomer der Lagerbuchse 3 ist das geschlitzte Rohrstück 15 eingefügt, das zur Versteifung des Elastomers dient.

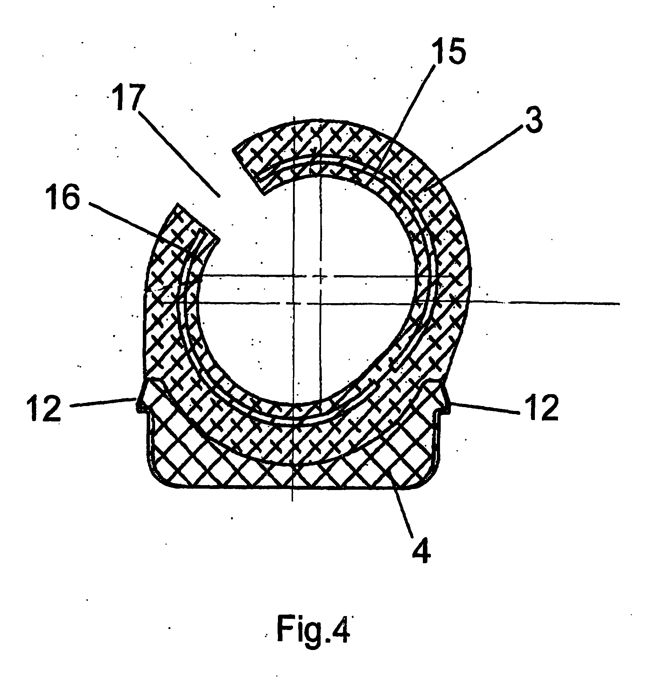

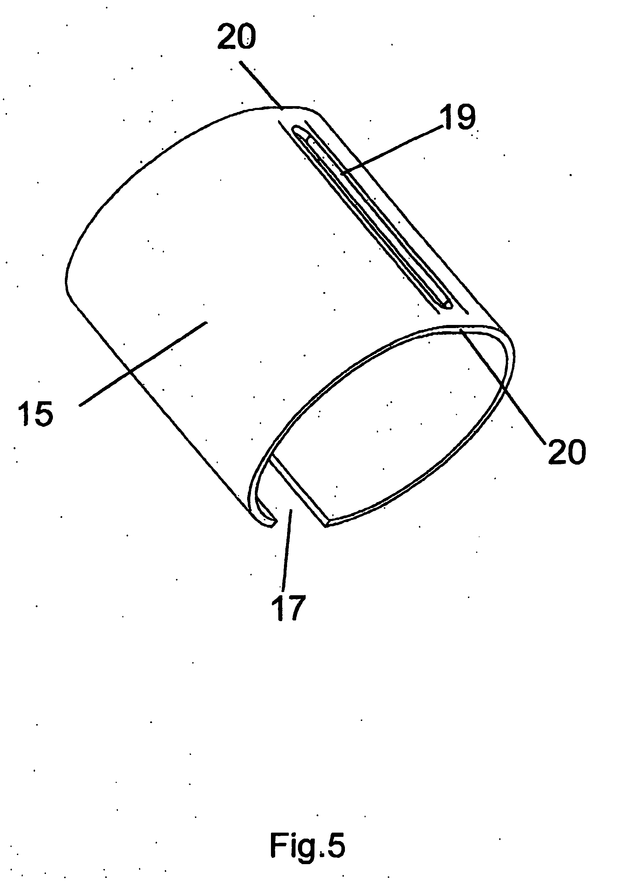

Die Ausbildung und Anordnung des Rohrstücks 15 ist in den Figuren 4 und 5 verdeutlicht. Die Figur 4 zeigt die Gestalt der Lagerbuchse 3 nach ihrer Herstellung. Auf der dem Lageraußenteil 4 abgewandten Seite der Lagerbuchse 3 ist der Längsspalt 17 vorhanden, der bei der Montage des Lagers geschlossen wird, indem die Lagerbuchse 3 in die Schelle 5 eingepresst wird. Dieses Einpressen geschieht durch das Lageraußenteil 4, welches mit den Hakennasen 12 in die seitlichen Öffnungen 13 in der Schelle 5 einrastet. Der Längsspalt 17 wird geschlossen und es verbleibt der in Figur 2 gezeigte Schlitz 18. Die Figur 5 zeigt das Rohr 15 in der perspektivischen Ansicht. Das Rohrstück 15 ist in Längsrichtung geschlitzt. Durch ein Aufbiegen des Rohrstücks 15 entsteht der Spalt 17. Siehe auch Figur 4. Auf der dem Spalt 17 gegenüber liegenden Seite hat das Rohrstück 15 eine Längsausnehmung 19, die bis auf die beiden Endbereiche 20 sich über nahezu die gesamte Länge des Rohrstücks 15 erstreckt.

## Patentansprüche

1. Stabilisatorlager zur Anlenkung einer Stabilisatorstange an einem Kraftfahrzeug, aus einer die Stange umschließenden aus einem Elastomer bestehenden und einen axialen Schlitz aufweisenden Lagerbuchse (3), die von einer Befestigungsschelle (5) umfasst ist, **dadurch gekennzeichnet, dass** die Lagerbuchse (3) durch ein in den Raum zwischen den Schellenseitenwänden eindrückbares und mit der Schelle (5) formschlüssig verbindbares Lageraußenteil (4) in der Schelle (5) gehalten ist und dass die Lagerbuchse (3) und der Lageraussenteil (4) von der Befestigungsschelle (5) an dem Karrosserieteil (6) oder Achsteil befestigt sind.

2. Stabilisatorlager nach Anspruch 1, **dadurch gekennzeichnet, dass** die Lagerbuchse (3) die Form einer Hülse hat.

3. Stabilisatorlager nach Anspruch 2, **dadurch gekennzeichnet, dass** das Lageraußenteil (4) mit seiner Innenkontur (9) an die Kontur der Lagerbuchse (3) angepasst ist.

4. Stabilisatorlager nach einem der Ansprüche 1 bis 3, **dadurch gekennzeichnet, dass** das Lageraußenteil (4) an seinen seitlich vorstehenden Wandteilen (11) Hakennasen (12) hat, die in Öffnungen (13) in den Seitenwänden (8) der Schelle (5) einrastbar sind.

5. Stabilisatorlager nach einem der Ansprüche 1 bis 4, **dadurch gekennzeichnet, dass** das Lageraußenteil (4) aus einem Kunststoff besteht.

6. Stabilisatorlager nach einem der Ansprüche 1 bis 5, **dadurch gekennzeichnet, dass** die Lagerbuchse (3) in dem von der Schelle (5) umfassten Bereich eine Auswölbung (14) hat.

7. Stabilisatorlager nach einem der Ansprüche 1 bis 6, **dadurch gekennzeichnet, dass** die Lagerbuchse (3) in dem vom Lageraußenteil (4) erfassten Bereich rohrförmig ist.

8. Stabilisatorlager nach einem der Ansprüche 1 bis 3, **dadurch gekennzeichnet, dass** in das Elastomer der Lagerbuchse (3)ein einseitig längsgeschlitztes Rohrstück (15) eingebettet ist

9. Stabilisatorlager nach Anspruch 8, **dadurch gekennzeichnet, dass** das Rohrstück (15) auf der dem Spalt (17) gegenüber liegenden Seite eine Längsausnehmung (19) hat.

10. Stabilisatorlager nach Anspruch 9, **dadurch gekennzeichnet, dass** die Längsausnehmung (19) mindestens dreiviertel der Rohrstücklänge beträgt.

11. Stabilisatorlager nach einem der Ansprüche 1 bis 7, **dadurch gekennzeichnet, dass** der axiale Schlitz (18) in der Lagerbuchse (3) auf der dem Lageraußenteil (4) abgewandten Seite angebracht ist.

## Claims

1. Stabilizer bearing for the articulated connection of a stabilizer bar to a motor vehicle, comprising a bearing bush (3) which surrounds the bar and is composed of an elastomer and has an axial slot, which bearing bush (3) is encompassed by a fastening clamp (5), **characterized in that** the bearing bush (3) is held in the clamp (5) by means of a bearing outer part (4) which can be pressed into the space between the clamp side walls and which can be connected in a positively locking manner to the clamp (5), and **in that** the bearing bush (3) and the bearing outer part (4) are fastened by the fastening clamp (5) to the body part (6) or axle part.

2. Stabilizer bearing according to Claim 1, **characterized in that** the bearing bush (3) has the form of a sleeve.

3. Stabilizer bearing according to Claim 2, **characterized in that** the bearing outer part (4) is matched with its inner contour (9) to the contour of the bearing bush (3).

4. Stabilizer bearing according to one of Claims 1 to 3, **characterized in that** the bearing outer part (4) has, on its laterally projecting wall parts (11), hook lugs (12) which can latch into openings (13) in the side walls (8) of the clamp (5).

5. Stabilizer bearing according to one of Claims 1 to 4, **characterized in that** the bearing outer part (4) is composed of a plastic.

6. Stabilizer bearing according to one of Claims 1 to 5, **characterized in that** the bearing bush (3) has a bulged portion (14) in the region encompassed by the clamp (5).

7. Stabilizer bearing according to one of Claims 1 to 6, **characterized in that** the bearing bush (3) is tubular in the region encompassed by the bearing outer part (4).

8. Stabilizer bearing according to one of Claims 1 to 3, **characterized in that** a tube piece (15) which is longitudinally slotted on one side is embedded into the elastomer of the bearing bush (3).

9. Stabilizer bearing according to Claim 8, **characterized in that** the tube piece (15) has a longitudinal recess (19) on the side situated opposite the gap (17).

10. Stabilizer bearing according to Claim 9, **characterized in that** the longitudinal recess (19) extends over at least three quarters of the length of the tube piece.

11. Stabilizer bearing according to one of Claims 1 to 7, **characterized in that** the axial slot (18) in the bearing bush (3) is formed on the side facing away from the bearing outer part (4).

## Revendications

1. Palier de stabilisateur destiné à l'articulation d'une barre de stabilisateur sur un véhicule automobile, en un coussinet (3) présentant une fente axiale, se composant d'un élastomère et entourant la barre, qui est entouré d'une coquille de fixation (5), **caractérisé en ce que** le coussinet (3) est maintenu dans la coquille (5) par une partie extérieure de palier (4) pouvant être insérée dans l'espace entre les parois latérales de la coquille et être assemblée par complémentarité de forme à la coquille (5), et **en ce que** le coussinet (3) et la partie extérieure de palier (4) sont fixés à la partie de carrosserie (6) ou à la partie d'axe par la coquille de fixation (5).

2. Palier de stabilisateur selon la revendication 1, **caractérisé en ce que** le coussinet (3) présente la forme d'une douille.

3. Palier de stabilisateur selon la revendication 2, **caractérisé en ce que** la partie extérieure de palier (4) est adaptée par son contour intérieur (9) au contour du coussinet (3).

4. Palier de stabilisateur selon l'une quelconque des revendications 1 à 3, **caractérisé en ce que** la partie extérieure de palier (4) comporte sur ses parties de paroi saillantes latéralement (11) des ergots d'accrochage (12), qui peuvent s'accrocher dans des ouvertures (13) dans les parois latérales (8) de la coquille (5).

5. Palier de stabilisateur selon l'une quelconque des revendications 1 à 4, **caractérisé en ce que** la partie extérieure de palier (4) est constituée d'une matière plastique.

6. Palier de stabilisateur selon l'une quelconque des revendications 1 à 5, **caractérisé en ce que** le coussinet (3) présente un renflement (14) dans la zone entourée par la coquille (5).

7. Palier de stabilisateur selon l'une quelconque des revendications 1 à 6, **caractérisé en ce que** le coussinet (3) est de forme tubulaire dans la zone saisie par la partie extérieure de palier (4).

8. Palier de stabilisateur selon l'une quelconque des revendications 1 à 3, **caractérisé en ce qu'**une pièce tubulaire (15) fendue en long d'un côté est noyée dans l'élastomère du coussinet (3).

9. Palier de stabilisateur selon la revendication 8, **caractérisé en ce que** la pièce tubulaire (15) présente un évidement longitudinal (19) sur le côté opposé à la fente (17).

10. Palier de stabilisateur selon la revendication 9, **caractérisé en ce que** l'évidement longitudinal (19) occupe au moins les trois quarts de la longueur de la pièce tubulaire.

11. Palier de stabilisateur selon l'une quelconque des revendications 1 à 7, **caractérisé en ce que** la fente axiale (18) est pratiquée dans le coussinet (3) sur le côté opposé à la partie extérieure de palier (4).
